## Europäisches Patentamt

## European Patent Office

## Office européen des brevets

(19)

(11) Veröffentlichungsnummer: **0 453 897 A1**

(12) # EUROPÄISCHE PATENTANMELDUNG

(21) Anmeldenummer: 91105828.7

(22) Anmeldetag: 12.04.91

(51) Int. Cl.5: **C03C 8/20, C03C 8/22**

(30) Priorität: 25.04.90 DE 4013139

(43) Veröffentlichungstag der Anmeldung:
30.10.91 Patentblatt 91/44

(84) Benannte Vertragsstaaten:
DE ES FR GB NL

(71) Anmelder: **BAYER AG**

**W-5090 Leverkusen 1 Bayerwerk(DE)**

(72) Erfinder: **Viquesnel, Alain**
**18, Route des Loges**
**F-78350 Jovy-en-Josa(FR)**
Erfinder: **Podestà, Wolfgang, Dr.**
**Lijsterdreef 20**
**B-8202 Varsenare(BE)**

(54) Selbstreinigende Beschichtungen für Ofenwandungen.

(57) Eine metallfreie, oxidische Überzugsmasse, bestehend aus mindestens einer Glasfritte mit einem Erweichungspunkt <480°C als Bindemittel, einem oder mehreren anorganischen Inertstoffen sowie einem Haftmittel, das zugleich als Oxidationskatalysator wirkt, die Beschichtung von Metallsubstraten, insbesondere Edelstahl, Aluminium und aluminisiertem Stahl, zur Ausbildung kontinuierlich selbstreinigender Beschichtungen auf Ofenwandungen von Koch-, Back- und Grillgeräten.

EP 0 453 897 A1

Die vorliegende Erfindung betrifft eine metallfreie, oxidische Überzugsmasse für die Beschichtung von Metallsubstraten, insbesondere Edelstahl, Aluminium und aluminisiertem Stahl, zur Ausbildung kontinuierlich selbstreinigender Beschichtungen auf Ofenwandungen von Koch-, Back- und Grillgeräten.

Selbstreinigende Beschichtungen auf Ofenwandungen sind in hohem Maße vorteilhaft, da sie die Entfernung von Fetttropfen bzw. organischen Speiseresten bei gewöhnlichen Back- bzw. Grilltemperaturen (180 bis 280°C) ermöglichen und somit einen separaten Reinigungszyklus bei erhöhter Temperatur - wie es bei pyrolytischen Backherden notwendig ist - überflüssig machen.

Selbstreinigende Beschichtungen sind seit längerem bekannt und in einer Reihe von Schriften näher beschrieben. Sie weisen jedoch eine Reihe von technischen, ökonomischen und/oder ökologischen Nachteilen auf, die ihre allgemeine Verwendbarkeit mehr oder weniger einschränken. So ist in US-PS 3 266 777 eine selbstreinigende Schicht auf Basis eines Oxidationskatalysators beschrieben, die nur sehr aufwendig herstellbar ist und aufgrund der enthaltenen Edelmetalle daneben auch noch teuer ist. Ähnliche Mängel weist auch die in US-PS 3 460 523 beschriebene Masse für die Beschichtung grundemaillierter Metallsubstrate auf. Auch dieses System enthält teure katalytisch aktive Metalle bzw. Metalloxide wie Platin, Ruthenium u.a

Ein weiteres Problem selbstreinigender Beschichtungen besteht häufig darin, daß die selbstreinigende Schicht entweder schlecht oder gar nicht auf dem Metallsubstrat haftet oder keine ausreichende Selbstreinigung bzw. Abriebfestigkeit aufweist. Um den Nachteil der fehlenden Haftung zu umgehen, wird die selbstreinigende Beschichtung in der Regel auf grundemaillierte Metallsubstrate aufgetragen und gebrannt. Dies hat den weiteren Vorteil, daß neben der guten Haftung auch eine gute Korrosionsbeständigkeit des Metalles gegeben ist. Die Grundemailschicht ist im Gegensatz zur selbstreinigenden Beschichtung nicht porös, so daß korrosive Flüssigkeiten und/oder Gase nicht an die Metalloberfläche gelangen können. Ein großer Nachteil einer derartigen, aus 2 Schichten bestehenden Beschichtung ist die aufwendige Auftragstechnik, da 2 Aufträge und 2 Einbrände benötigt werden. Daher wird in DE-A 2 614 696 der Zusatz eines flüchtigen Emails zu einem Oxidationskatalysator vorgeschlagen. Das Email schlägt sich teils auf der Metalloberfläche nieder und verhindert damit die Oxidation des Metalles. Teils verdampft das flüchtige Email und erzeugt damit einen porösen Überzug, der für die Funktionsfähigkeit des Oxidationskatalysators unbedingt erforderlich ist. Nachteilig bei diesem Verfahren ist allerdings der hohe Gehalt dieses Emails an gesundheitsbedenklichen, flüchtigen Substanzen, wie z.B. Antimonoxid oder Bleioxid.

In DE-A 2 910 076 und DE-A 3 626 424 wird die als Grundemailschicht aufgetragende Oxidationsschutz- und Haftvermittlerschicht gemeinsam mit der selbstreinigenden Beschichtung eingebrannt (Zweischicht-Ein-Brandverfahren). Dieses Verfahren stellt für korrosionsanfällige Metalle, wie z.B. strangvergossenen (entkohlten) Emaillierstahl, das derzeit optimale Verfahren dar und bringt gegenüber dem klassischen Zweischicht - Zwei-Brand-Verfahren - deutliche Kostenvorteile, hat aber immer noch den Nachteil eines zweifachen Email-/Keramikauftrages.

Auf weitgehend korrosionsbeständigen Metallsubstraten, wie z.B. Edelstahl, Aluminium, aluminisiertem Stahl und dergleichen, ist ein aus 2 Schichten bestehender Überzug jedoch nicht erforderlich, da das Metall selbst einen hinreichenden Korrosionsschutz gewährleistet. Prinzipiell denkbar wäre es daher, die selbstreinigende Beschichtung direkt auf das korrosionsbeständige Metallsubstrat aufzutragen und durch Brand mit dem Metall zu verbinden. Dies würde den zusätzlichen Vorteil bieten, daß die selbstreinigende Beschichtung nicht wie beim Zweischichtsystem - in das Grundemail eindringen und damit teilweise unwirksam werden kann.

Allerdings stellt hierbei die Haftung zwischen Metal und selbstreinigender Beschichtung ein bisher ungelöstes Problem dar. Hinzu kommt, daß die Temperatur für den Einbrand dieser Schicht zumindest auf Aluminium und seinen Legierungen bzw. auf aluminisiertem Stahl auf maximal 600°C begrenzt ist.

In DE-A 2 928 895 wird ein Verfahren vorgeschlagen, bei dem der Oxidationskatalysator - vermengt mit aluminiumhaltigem Material - in ein organisches Bindemittel eingebettet wird. Diese Masse wird dann in relativ dünner Schichtstärke auf die Metalloberfläche aufgetragen und bei Temperaturen von 300 bis 400°C eingebrannt. Dabei wird das organische Bindemittel teilweise in $SiO_2$ umgewandelt und der Katalysator aktiviert. Nachteil dieses Verfahrens ist jedoch die Freisetzung größerer Mengen von organischen Zersetzungsprodukten bzw. organischen Lösungsmitteln während des Tempervorganges sowie die Verwendung teurer Edelmetallkatalysatoren.

Aufgabe war es daher, eine kontinuierlich selbstreinigende Überzugsmasse zur Verfügung zu stellen, die direkt und ohne Verwendung organischer Bindemittel auf Metallsubstrate aufgetragen werden kann und während eines ca. 5- bis 15-minütigen Einbrandes bei Temperaturen von ca. 450 bis 620°C eine guthaftende, poröse Beschichtung bildet. Darüber hinaus soll die Überzugsmasse keine teuren metallischen Katalysatoren, wie Pd, Pt etc. enthalten und sowohl in Form einer nassen Suspension als auch als Trockenpulver auf die Metallsubstrate auftragbar sein.

2

Durch Bereitstellung der erfindungsgemäßen Überzugsmasse konnte diese Aufgabe gelöst werden.

Gegenstand der Erfindung ist eine metallfreie, oxidische Überzugsmasse für die Beschichtung von Metallsubstraten, insbesondere Edelstahl, Aluminium, aluminisiertem Stahl, zur Bildung selbstreinigender Beschichtungen, wobei diese Masse mindestens aus einer Glasfritte mit einem Erweichungspunkt von <480° C als Bindemittel, einem oder mehreren an organischen Inertstoffen sowie einem Haftmittel, das zugleich als Oxidationskatalysator wirkt, besteht.

Die Glasfritte enthält bevorzugt emailübliche Bestandteile, wie $SiO_2$, $B_2O_3$, $TiO_2$, $ZrO_2$, $P_2O_5$, $V_2O_5$, $Fe_2O_3$, MnO, $Al_2O_3$, Alkalioxide und Erdalkalioxide, jedoch kein Antimonoxid, Arsenoxid, Cadmiumoxid und Bleioxid und liegt mit einem Gewichtsanteil von mindestens 25 bis maximal 75 Gew.-%, bezogen auf das Trockengewicht der Masse, vor.

Der oder die anorganischen Inertstoffe sind vorzugsweise hitzebeständige Verbindungen, wie z.B. Quarz, Feldspat, Aluminiumoxid, Zirkonsilikat, Ilmenit, feuerbeständige Farbkörper und/oder geschmolzene Fritten mit einem Erweichungspunkt >560° C oder Mischungen davon und liegen mit einem Gewichtsanteil von mindestens 20 bis maximal 80 Gew.-%, bezogen auf das Trockengewicht der Masse, vor.

Das Haftmittel, das zugleich Oxidationskatalysator ist, besteht aus einer Sauerstoffverbindung des Kupfers, Kobalts oder Nickels oder Mischungen davon oder aus diesen Mischungen mit einer Sauerstoffverbindung des Chroms, Mangans und/oder Eisens und liegt mit einem Gewichtsanteil von mindestens 5 bis maximal 50 Gew.-%, bezogen auf das Trockengewicht der Masse, vor.

Bevorzugt werden die verschiedenen Bestandteile der Masse entweder einzeln oder zusammen auf eine Mahlfeinheit von 0,01 bis 0,3 mm Korndurchmesser vermahlen, gegebenenfalls unter Zufügen von Hilfsmitteln für die nasse oder trockene Beschichtung der Metallsubstrate mit der Masse.

Die erfindungsgemäße Überzugsmasse eignet sich besonders für die Beschichtung von aluminisiertem Stahl, der für den Auftrag nur entfettet werden muß. Wie auch beim Aluminium ergibt sich hier gegenüber Stahl als zusätzlicher Vorteil die bessere Wärmeverteilung über die Metalloberfläche aufgrund der höheren Wärmeleitfähigkeit des Aluminiums. Aber auch die haftfeste Beschichtung von gebeiztem Edelstahl ist mit der erfindungsgemäßen Masse möglich.

Überraschenderweise zeigte sich, daß die erfindungsgemäße Überzugsmasse nicht nur nach den für kontinuierlich selbstreinigende Beschichtungen üblichen Auftragsverfahren (Spritzen, Fluten, Tauchen) auf der Metalloberfläche in ausreichenden Schichtstärken von 80 bis 180 μm abgeschieden werden kann, sondern auch durch elektrostatischen Pulverauftrag.

Der besondere Vorteil des elektrostatischen Pulverauftrags besteht darin, daß außer dem für den Pulverauftrag erforderlichen Silikonöl (vgl. US-PS 3 928 668) keine weiteren Mühlenzusätze wie z.B. Elektrolyte, Suspensions- und Schwebemittel benötigt werden. Diese Zusätze können nämlich die beim Einbrand der Überzugsmasse gebildeten und für eine gute Selbstreinigung unbedingt erforderlichen Poren verstopfen. Damit ist mit dem Pulverauftrag grundsätzlich eine bessere selbstreinigende Beschichtung zu erreichen als mit dem konventionellen Naßauftrag.

Die Überzugsmasse wird zur Ausbildung selbstreinigender Beschichtungen auf Ofenwandungen von Koch-, Back- und Grillgeräten verwendet.

Die für die erfindungsgemäße Überzugsmasse benötigten Glasfritten werden aus handelsüblichen Emailrohstoffen wie Quarzmehl, Borax ($Na_2B_4O_7 5H_2O$), Feldspat, Natriumpolyphosphat, Zirkonsand, Vanadiumpentoxid, Alkali- und Erdalkalicarbonaten, den zur Einfärbung benötigten Übergangsmetalloxiden sowie (für die Glasfritten mit hohem Erweichungspunkt) Ilmenit, Schmelzbasalt und Flußspat bei Temperaturen von 1000° C bis 1450° C erschmolzen und über wassergekühlte Stahlwalzen bzw. durch Ablassen in Wasser abgeschreckt. Die so hergestellten Glasfritten werden mit weiteren Inertstoffen und Haftmitteln gemischt, vermahlen und auf Prüfblechen von 0,5 bis 2 mm Stärke aufgebracht und in einem Boxofen eingebrannt.

Die so hergestellten Beschichtungen haben üblicherweise Schichtstärken von 80 bis 180 μm (in Ausnahmefällen bis zu 300 μm). Die Prüfung der Selbstreinigungseigenschaften der fest mit dem Metallsubstrat verbundenen Beschichtungen erfolgt nach DIN ISO 8291 (Öltest).

Der Gegenstand der vorliegenden Erfindung soll anhand der folgenden Beispiele näher erläutert werden.

Beispiel 1

Aus handelsüblichen Emailrohstoffen wurden in Schamottetiegeln von 700 ml Volumen bei 1100° C (Bindemittelfritte mit niedrigem Erweichungspunkt) bzw. bei 1400° C (Inertstofffritte mit hohem Erweichungspunkt) Glas- bzw. Emailfritten folgender Zusammensetzung erschmolzen (in Gewichts-%):

3

|  | A Glasfritte mit niedrigem Erweichungspunkt | B Glasfritte mit hohem Erweichungspunkt |
|---|---|---|
| $SiO_2$ | 30,5 | 19,3 |
| $TiO_2$ | 22,8 | 30,8 |
| $ZrO_2$ | 2,0 | - |
| $P_2O_5$ | 1,1 | - |
| $V_2O_5$ | 7,3 | - |
| $Al_2O_3$ | 0,3 | 2,2 |
| $Li_2O$ | 1,6 | - |
| $Na_2O$ | 17,1 | 5,1 |
| $K_2O$ | 9,9 | 0,2 |
| $B_2O_3$ | 0,6 | - |
| $ZnO$ | 6,6 | - |
| $CaO$ | 0,3 | 1,6 |
| $Fe_2O_3$ | - | 19,5 |
| $MnO$ | - | 7,6 |
| $CoO$ | - | 1,5 |
| $MgO$ | - | 1,2 |
| $CaF_2$ | - | 11,0 |

wobei die Schmelzdauer 25 (Glasfritte A) bzw. 45 Minuten (Glasfritte B) betrug. Nach dem Abschrecken dieser Emailfritten in Wasser wurden diese in einer Kugelmühle jeweils trocken auf eine Mahlfeinheit von durchschnittlich 10 bis 100 $\mu$m vermahlen, nach einer der nachfolgenden Mühlenformeln mit Inertstoffen und Haftmitteln/Oxidationskatalysatoren sowie Suspensions- und Schwebemitteln und Wasser gemischt und dann entweder durch Spritzen oder durch Eintauchen der Bleche in den Schlicker auf aluminisierten Stahl bzw. Aluminium aufgetragen:

|  | Mühlenformel 1 (Spritzauftrag) | Mühlenformel 2 (Tauchauftrag) |
|---|---|---|
| Glasfritte A, gemahlen | 32,5 % | 40 % |
| Glasfritte B, gemahlen | 52,5 % | 40 % |
| Quarzmehl | - | 10 % |
| $Al_2O_3$ | - | 3 % |
| Schmelzbasalt | 10 % | 5 % |
| Thermostabiler FK | 5 % | 2 % |
| CuO | 30 % | 25 % |
| CoO | - | 5 % |
| Borsäure | 1 % | 2 % |
| Blauton | 1,5 % | 2 % |
| Borax | 1 % | - |
| Betonit | 2 % | 0,5 % |
| Natriumnitrit | 0,15 % | - |
| Kaliumhydroxid | 1 % | - |
| Carboxymethylcellulose | - | 0,15 % |

Bei Mühlenformel 1 wurden die trocken vorgemahlenen Glasfritten zusammen mit den obengenannten Zusätzen und 50 Gew.-% Wasser kurz in einer Kugelmühle gemischt und auf das entfettete Blech durch Spritzen aufgetragen.

Bei Mühlenformel 2 wurden die trocken vorgemahlenen Glasfritten ohne Zusatz von Wasser mit den übrigen Bestandteilen in einer Kugelmühle gemischt. Für den Tauchauftrag wurde das Pulver in 50 Gew.-% Wasser, in dem zuvor 1 Gew.-% KOH aufgelöst wurde, eingerührt und die Mischung etwa 15 bis 30 Minuten gerührt. Beim Eintauchen der Substrate ergab sich dann die gewünschte Schichtdicke von ca. 100 bis 150 µm (bezogen auf die gebrannte Masse).

Die noch feuchte Beschichtung wurde bei Temperaturen unterhalb des Siedepunktes von Wasser getrocknet und anschließend bei ca. 560° C 10 Minuten eingebrannt.

Bei den genannten Beispielen ist zu beachten, daß der Schlicker pH-Werte von 10 bis 11 nicht überschreitet, da sonst eine ungewünschte Reaktion zwischen dem alkalischen Schlicker und dem an der Substratoberfläche vorliegenden Aluminium einsetzt (Wasserstofffreisetzung). Ein zu alkalischer Schlicker sollte daher durch Zusatz von Borsäure oder anderen pH-erniedrigenden Reagenzien auf einen pH von ca. 10 eingestellt werden.

Die fertig gebrannten Bleche zeigten in jedem Fall eine gute Haftung der Überzugsmasse sowie eine Selbstreinigungsfähigkeit von mind. 5 Zyklen nach DIN ISO 8291.

Beispiel 2

Die gemäß Beispiel 1 hergestellten Glasfritten A und B wurden nach einer der nachfolgenden Mühlenformeln mit Haftmitteln/Oxidationskatalysatoren unter Zusatz weiterer Inertstoffe gemischt und zusammen mit der für die Erzielung einer guten Pulverabscheidung, -penetration bzw. -haftung erforderlichen Menge Silikonöl trocken auf eine Mahlfeinheit von durchschnittlich 10 bis 100 µm vermahlen.

|                          | Mühlenformel 3 (Pulverauftrag) | Mühlenformel 4 (Pulverauftrag) | Mühlenformel 5 (Pulverauftrag) |
|--------------------------|--------------------------------|--------------------------------|--------------------------------|
| Glasfritte A             | 50,0 %                         | 35,0 %                         | 40,0 %                         |
| Glasfritte B             | 30,0 %                         | 30,0 %                         | 40,0 %                         |
| Schmelzbasalt            | -                              | 10  %                          | -                              |
| $Al_2O_3$                | -                              | 5  %                           | -                              |
| CuO                      | 20,0 %                         | -                              | 15,0 %                         |
| CoO                      | -                              | 10,0 %                         | 5,0 %                          |
| $Fe_2O_3$                | -                              | 10,0 %                         | -                              |
| Methyl-Wasser-stoff-Siloxan | 0,3 %                       | 0,5 %                          | 0,5 %                          |
| Methylsiloxan            | 0,6 %                          | 0,5 %                          | 0,3 %                          |

Die so hergestellten Pulver wurden mit einer Elektrostatikpistole unter Anlegen einer Spannung von 70 kV auf aluminisiertem Stahl oder Edelstahl in einer Schichtdicke aufgetragen, die in gebrannter Form ca. 100 µm entspricht. Die so hergestellten Bleche wurden anschließend ca. 10 Minuten bei 540°C (aluminisierter Stahl) bzw. 610°C (Edelstahl) eingebrannt.

Die gebrannten Bleche zeigten eine sehr gute Haftung zwischen poröser Beschichtung und Substrat sowie eine Selbstreinigungsfähigkeit nach DIN ISO 8291 von mindestens 6 Zyklen. Dies entspricht der Selbstreinigungsfähigkeit von konventionell präparierten Beschichtungen (Zweischicht-Zwei-Brand bzw. Zweischicht-Ein-Brand auf Stahl).

Für die Versuche wurden vorbehandelte Bleche von ca 0,8 bis 1,4 mm Dicke verwendet. Als Vorbehandlungsmethode wurde eine Glühentfettung (5 Min. bei 560°C glühen), alkalische oder Trichlorethan-Entfettung angewendet, bei Edelstahl zusätzlich eine Beize in oxidierenden Säuren bzw. Flußsäure.

**Patentansprüche**

1. Metallfreie Überzugsmasse zur Bildung selbstreinigender Beschichtungen auf Edelstahl, Aluminium, aluminisiertem Stahl oder anderen Metallsubstraten, dadurch gekennzeichnet, daß die Masse mindestens aus einer Glasfritte mit einem Erweichungspunkt <480°C als Bindemittel, einem oder mehreren anorganischen Inertstoffen sowie einem Haftmittel, das zugleich als Oxidationskatalysator wirkt, besteht.

2. Masse nach Anspruch 1, dadurch gekennzeichnet, daß die Glasfritte emailübliche Bestandteile wie $SiO_2$, $B_2O_3$, $TiO_2$, $ZrO_2$, $P_2O_5$, $V_2O_5$, $Fe_2O_3$, MnO, $Al_2O_3$, Alkalioxide und Erdalkalioxide, jedoch kein Antimonoxid, Arsenoxid, Cadmiumoxid und Bleioxid enthält und mit einem Gewichtsanteil von mindestens 25 bis maximal 75 Gew.-%, bezogen auf das Trockengewicht der Masse, vorliegt.

3. Masse nach Anspruch 1, dadurch gekennzeichnet, daß der oder die anorganischen Inertstoffe aus hitzebeständigen Verbindungen wie z.B. Quarz, Feldspat, Aluminiumoxid, Zirkonsilikat, Ilmenit, feuerbeständigen Farbkörpern und/oder einer geschmolzenen Fritte mit einem Erweichungspunkt >560°C oder Mischungen davon besteht und mit einem Gewichtsanteil von mindestens 20 bis maximal 80 Gew.-%, bezogen auf das Trockengewicht der Masse, vorliegt.

4. Masse nach Anspruch 1, dadurch gekennzeichnet, daß das Haftmittel, das zugleich Oxidationskatalysator ist, aus einer Sauerstoffverbindung des Kupfers, Cobalts oder Nickels oder Mischungen davon oder aus diesen Mischungen mit einer Sauerstoffverbindung des Chroms, Mangans und/oder Eisens besteht und mit einem Gewichtsanteil von mindestens 5 bis maximal 50 Gew.-%, bezogen auf das Trockengewicht der Masse, vorliegt.

5. Masse nach Anspruch 1, dadurch gekennzeichnet, daß die verschiedenen Bestandteile, die entweder einzeln oder zusammen vermahlen wurden, gegebenenfalls unter Zufügen von Hilfsmitteln für die nasse oder trockene Beschichtung der Metallsubstrate mit der Masse, eine Mahlfeinheit von 0,01 bis 0,3 mm Korndurchmesser aufweisen.

6. Verwendung der Masse nach Anspruch 1 bis 5, dadurch gekennzeichnet, daß die Masse entweder in Form eines trocken bereiteten Pulvers oder einer Suspension in Wasser in einer Schicht direkt auf das Metallsubstrat aufgetragen wird und in einem Brand von ca. 5 bis 15 Minuten bei Temperaturen von 450 bis 620 °C fest eingebrannt wird.

7. Verwendung der Masse nach Anspruch 1 bis 5 zur Ausbildung selbstreinigender Beschichtungen auf Ofenwandungen von Koch-, Back- und Grillgeräten.

**Patentansprüche für folgenden Vertragsstaat: ES**

1. Verfahren zur Herstellung einer metallfreie Überzugsmasse zur Bildung selbstreinigender Beschichtungen auf Edelstahl, Aluminium, aluminisiertem Stahl oder anderen Metallsubstraten, dadurch gekennzeichnet, daß zu einer Glasfritte mit einem Erweichungspunkt <480 °C als Bindemittel ein oder mehrere anorganische Inertstoffe sowie ein Haftmittel, das zugleich als Oxidationskatalysator wirkt, gegeben wird.

2. Verfahren nach Anspruch 1, dadurch gekennzeichnet, daß die Glasfritte emailübliche Bestandteile wie $SiO_2$, $B_2O_3$, $TiO_2$, $ZrO_2$ $P_2O_5$, $V_2O_5$, $Fe_2O_3$, MnO, $Al_2O_3$, Alkalioxide und Erdalkalioxide, jedoch kein Antimonoxid, Arsenoxid, Cadmiumoxid und Bleioxid enthält und mit einem Gewichtsanteil von mindestens 25 bis maximal 75 Gew.-%, bezogen auf das Trockengewicht der Masse, vorgelegt wird.

3. Verfahren nach Anspruch 1, dadurch gekennzeichnet, daß der oder die anorganischen Inertstoffe aus hitzebeständigen Verbindungen wie z.B. Quarz, Feldspat, Aluminiumoxid, Zirkonsilikat, Ilmenit, feuerbeständigen Farbkörpern und/oder einer geschmolzenen Fritte mit einem Erweichungspunkt >560 °C oder Mischungen davon besteht und mit einem Gewichtsanteil von mindestens 20 bis maximal 80 Gew.-%, bezogen auf das Trockengewicht der Masse, vorgelegt wird.

4. Verfahren nach Anspruch 1, dadurch gekennzeichnet, daß das Haftmittel, das zugleich Oxidationskatalysator ist, aus einer Sauerstoffverbindung des Kupfers, Cobalts oder Nickels oder Mischungen davon oder aus diesen Mischungen mit einer Sauerstoffverbindung des Chroms, Mangans und/oder Eisens besteht und mit einem Gewichtsanteil von mindestens 5 bis maximal 50 Gew.-%, bezogen auf das Trockengewicht der Masse, vorgelegt wird.

5. Verfahren nach Anspruch 1, dadurch gekennzeichnet, daß die verschiedenen Bestandteile entweder einzeln oder zusammen auf eine Mahlfeinheit von 0,01 bis 0,3 mm Korndurchmesser vermahlen werden, gegebenenfalls unter Zufügen von Hilfsmitteln für die nasse oder trockene Beschichtung der Metallsubstrate mit der Masse.

6. Verwendung der nach Anspruch 1 bis 5 hergestellten Masse, dadurch gekennzeichnet, daß die Masse entweder in Form eines trocken bereiteten Pulvers oder einer Suspension in Wasser in einer Schicht direkt auf das Metallsubstrat aufgetragen wird und in einem Brand von ca 5 bis 15 Minuten bei Temperaturen von 450 bis 620 °C fest eingebrannt wird.

7. Verwendung der Masse nach Anspruch 1 bis 5 zur Ausbildung selbstreinigender Beschichtungen auf Ofenwandungen von Koch-, Back- und Grillgeräten.

Europäisches
Patentamt

# EUROPÄISCHER
# RECHERCHENBERICHT

Nummer der Anmeldung

**EP 91 10 5828**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 400 876 (MATSUSHITA ELECTRIC IND COMP LTD)<br>* das ganze Dokument *<br>– – – | 1-7 | C 03 C 8/20<br>C 03 C 8/22 |
| X | US-A-4 147 835 (A. NISHINO ET AL)<br>* das ganze Dokument *<br>– – – | 1-7 | |
| A,D,A | US-A-4 460 630 (A. NISHINO ET AL)<br>* das ganze Dokument & DE-A-2910076 *<br>– – – | 1-7 | |
| A,D,A | EP-A-0 255 896 (BAYER AG)<br>* das ganze Dokument & DE-A-3626424 *<br>– – – | 5-6 | |
| D,A | US-A-3 928 668 (J.D. SNOW)<br>* das ganze Dokument *<br>– – – – – | 5-6 | |

| RECHERCHIERTE SACHGEBIETE (Int. Cl.5) |
|---|
| C 03 C<br>F 24 C<br>B 01 J<br>C 25 D |

Der vorliegende Recherchenbericht wurde für alle Patentansprüche erstellt

| Recherchenort | Abschlußdatum der Recherche | Prüfer |
|---|---|---|
| Berlin | 05 August 91 | KUEHNE H C |